# EUROPÄISCHE PATENTSCHRIFT

(11) **EP 3 821 520 B1**
(45) Veröffentlichungstag und Bekanntmachung des Hinweises auf die Patenterteilung: **12.07.2023**
(21) Anmeldenummer: 19723786.0
(22) Anmeldetag: 11.05.2019
(51) Int. Cl.: H02K 11/215, H02K 11/01, B60T 13/66, B60T 8/36, G01D 11/24

(54) **ROTORPOSITIONSSENSOR FÜR EINEN GLEICHSTROMMOTOR**
ROTOR POSITION SENSOR FOR A DIRECT CURRENT MOTOR
CAPTEUR DE POSITION DE ROTOR POUR UN MOTEUR À COURANT CONTINU

(30) Priorität: 10.07.2018 DE 102018211433
(43) Veröffentlichungstag der Anmeldung: 19.05.2021
(73) Patentinhaber: Robert Bosch GmbH, 70442 Stuttgart (DE)
(72) Erfinder: JOERG, Martin, 87497 Wertach (DE)
(86) Internationale Anmeldenummer: PCT/EP2019/062106
(87) Internationale Veröffentlichungsnummer: WO 2020/011420

(56) Entgegenhaltungen:
- EP-A1- 2 017 944
- EP-A1- 3 106 840
- EP-A2- 0 801 458
- WO-A1-2017/034691
- DE-A1-102017 218 648
- DE-U1- 29 515 381
- DE-U1-202007 011 837
- US-A1- 2017 223 855
- US-A1- 2017 290 208

## Beschreibung

Die Erfindung geht aus von einem Rotorpositionssensor für einen Gleichstrommotor. Gegenstand der vorliegenden Erfindung ist auch ein ESP-System (ESP: Elektronisches Stabilitätsprogramm) mit einem solchen Rotorpositionssensor.

Bei einem verbesserten ESP-System soll anstelle eines einfachen Gleichstrommotors ein bürstenloser Gleichstrommotor eingesetzt werden, der auch als bürstenloser EC-Motor (Electronically Commutated Motor) bezeichnet ist. Dieser erreicht bei richtiger Ansteuerung höhere Drehzahlen und somit kann der Bremsdruck im Fahrzeug schneller aufgebaut werden, was im Endeffekt zu einem Verkürzen des Bremsweges führt. Um den Motor zum richtigen Zeitpunkt anzusteuern, wird ein Rotorpositionssensor (RPS) eingesetzt, welcher die momentane Drehposition des Motors erkennt und diese Position an ein Steuergerät weitergibt. Hierzu wird beispielsweise an einem freien Ende einer Motorwelle ein Permanentmagnet angeordnet, dessen Feldlinien den, auf ein Pumpengehäuse montierten Rotorpositionssensor durchlaufen. Der Rotorpositionssensor umfasst ein Kunststoffgehäuse und ein Sensorelement, welches beispielsweise auf dem TMR-Effekt (magnetoresistiver Tunneleffekt) basiert und die Winkel der Magnetfeldlinien detektiert. Auf der gleichen Pumpengehäuseseite befinden sich in der Regel aber auch viele Magnetventile, welche durch gezieltes Bestromen der Magnetspulen geschaltet werden. Dadurch entstehen elektromagnetische Störfelder rund um den Rotorpositionssensor, welche abgeschirmt werden sollten, da sonst das magnetische Signal der Motorwelle verfälscht wird und der Motor durch die entstehenden Winkelfehler nicht mehr optimal angesteuert werden kann. Für die elektromagnetische Abschirmung ist am Rotorpositionssensor ein Abschirmblech vorgesehen, welches in definierter Position zum Sensorelement angebracht wird. Das Abschirmblech befindet sich in der Regel außen auf dem Kunststoffgehäuse in einem definierten Abstand zum Sensorelement. Um das Abschirmblech dauerhaft in Position zu halten, könnte das Abschirmblech mit dem Kunststoffgehäuse umspritzt werden. Dadurch kann ein Formschluss generiert werden, welcher die Position des Abschirmblechs auf Dauer sicherstellt. Dies führt jedoch zu erhöhten Werkzeugkosten beim Spritzgießen und ist oft auch Designbedingt im Werkzeug nicht, bzw. nur mit erhöhtem (Kosten-) Aufwand umzusetzen. Eine andere Möglichkeit ist es, das Abschirmblech im Nachgang auf das Kunststoffgehäuse zu montieren. Dabei sollte sichergestellt sein, dass das Abschirmblech einerseits während der Montageprozesse in der Sensorfertigung, aber auch im verbauten Zustand im Fahrzeug unter allen Umwelteinflüssen (Temperatur, Feuchte, etc.) die eingestellte Position nicht mehr verändert. Hierzu kann beispielsweise ein "geschlitztes Blech" verwendet werden. Eine Blechplatine des Abschirmblechs wird entsprechend der Geometrie des Kunststoffgehäuses gebogen, die beiden Blechenden liegen stumpf aneinander bzw. bilden toleranzbedingt einen kleinen Spalt. Wird nun das Abschirmblech montiert, kann dies auf Grund der offenen Blechenden auffedern und sich auf der Außenkontur des Kunststoffgehäuses wieder verspannen. Für eine langfristige Sicherung kann ein im Abschirmblech ausgesparter Kunststoffsteg heißverstemmt werden.

Aus der EP 0 801 458 A2 ist ein Elektromotor mit einem Stator mit einem innenliegenden Permanentmagneten und einer diesen unter Bildung eines Ringluftspalts umgebenden, rohrförmigen Rückschlusshülse bekannt, welche in ihrer axialen und radialen Lage durch eine Kunststoffumspritzung relativ zum Permanentmagneten gehalten und mit diesem verbunden ist. Hierbei reicht die Kunststoffumspritzung bis etwa an den Außenumfang der Rückschlusshülse. Zudem sind an einem Endbereich der Rückschlusshülse axial verlaufende Aussparungen mit jeweils mindestens zwei in Richtung des Hülseninneren aufeinander zulaufenden Kanten angeordnet, an denen die Kunststoffumspritzung an der Rückschlusshülse verankert ist. Des Weiteren weist die Rückschlusshülse eine Längsnaht mit einem zugehörigen Hülsendurchmesser derart auf, dass die beiden diese bildenden Stirnseiten nach Art eines Puzzles ineinandergreifen.

Aus der nachveröffentlichten DE 10 2017 218 648 A1 ist ein Rotorpositionssensor für einen Gleichstrommotor bekannt, welcher ein Gehäuse, ein Sensorelement und ein das Gehäuse umschließendes Abschirmblech umfasst. Das Abschirmblech ist als Hülse ausgebildet und über das Gehäuse geschoben. An einem oberen Rand des Abschirmblechs ist an mindestens zwei gegenüberliegenden Seiten jeweils eine Prägung ausgebildet, welche eine Vorspannkraft auf das Gehäuse ausüben. Zudem wird ein Antriebsaggregat, insbesondere ein Hydraulikaggregat für eine elektronisch schlupfregelbare Fahrzeugbremsanlage offenbart, welche einen solchen Rotorpositionssensor umfasst.

Aus der DE 295 15 381 U1 ist ein Gleichstrommotor mit einer Welle, einem darauf angeordnetem Kollektorelement, welches aus einer Kollektorplatte und einem von der Kollektorplatte über das Wellenende hinaus abstehenden Kollektor besteht, und einem ein Codeelement umfassenden Winkelschrittgeber bekannt. Hierbei ist das Kollektorelement an der von der Kollektorplatte abgewandten Seite über den Kollektor hinaus zu einem Wellenabschnitt verlängert, an dem das Codeelement fest anbringbar ist. Die auf dem Wellenabschnitt befestigte Codescheibe ist von einem becherförmig ausgebildeten Abschirmungsgehäuse umgeben, wobei in dem offenen Ende die Codescheibe aufgenommen wird.

Aus der DE 20 2007 011 837 U1 ist eine Sensoreinheit mit einem um seine Längsachse detektierenden Winkelsensor mit einem magnetisch empfindlichen Stirnflächenbereich, der nach dem Hall-Prinzip oder dem magnetoresistiven Prinzip arbeitet, mit einem Sensorelement in der Nähe seiner Stirnfläche, wenigstens einer Magnet-Einheit bekannt, die so angeordnet ist, dass ihr Magnetfeld den Winkelsensor durchsetzt, und die Feldlinien des wenigstens einen Gebermagneten der Magnet-Einheit insbesondere parallel zur sensitiven Ebene des Sensor-Elementes verlaufen. Hierbei weist die Sensor-Einheit eine magnetisch leitfähige Abschirmung, insbesondere aus ferromagnetischem Material, auf.

Aus der EP 2 017 944 A1 ist ein elektrischer Kleinstantrieb, insbesondere permanentmagneterregter Drehfeldantrieb, mit einem Stator und einem den Stator zylindrisch umschließenden weichmagnetischen Rückschlusselement mit einer Vielzahl von zu einem zylindrischen Blechpaket geschichteten, ringscheibenförmigen Blechlamellen bekannt. Die Blechlamellen des Blechpaketes sind in einer diese koaxial umschließenden Trägerhülse ausschließlich kraft- und formschlüssig und ohne Klebstoff oder dergleichen Stoffschlussmittel axial und radial unter Vorspannung gehalten. Die Trägerhülse wird aus einem ursprünglich flachen Blechmaterial als Zuschnitt ausgestanzt und dann in ihre zylindrische Form umgeformt, insbesondere gerollt. Dabei werden zwei in Umfangsrichtung aneinander angrenzende Längsränder über ineinander greifende Formschlusselemente miteinander verbunden. Zudem dient die Trägerhülse des Rückschlusselements auch zur Halterung von Lagerschilden. Dazu greift jeder Lagerschild mit einem Halteabschnitt axial in die Trägerhülse ein und ist über mehrere umfangsgemäß verteilt angeordnete, als Formprägungen radial nach innen geprägte und jeweils eine Haltekante des Lagerschildes hintergreifende Halteprägungen befestigt.

### Offenbarung der Erfindung

Der Rotorpositionssensor für einen Gleichstrommotor mit den Merkmalen des unabhängigen Patentanspruchs 1 hat den Vorteil, dass durch ein geschlossenes Abschirmblech eine höhere Schirmwirkung erreicht werden kann. Bei Simulationen und Messungen konnte eine Halbierung des Winkelfehlers festgestellt werden.

Ausführungsformen der vorliegenden Erfindung stellen einen Rotorpositionssensor für einen Gleichstrommotor, mit einem Gehäuse, einem Sensorelement und einem das Gehäuse umschließenden Abschirmblech zur Verfügung. Das Abschirmblech ist als umfänglich geschlossener Hohlkörper ausgebildet und über das Gehäuse geschoben, wobei die beiden Enden des Abschirmblechs an einer Verbindungsstelle des Hohlkörpers eine ineinandergreifende Verbindungskontur ausbilden. Zudem ist an einem ersten vom Gleichstrommotor abgewandten oberen Rand des Abschirmblechs an mindestens zwei gegenüberliegenden Seiten jeweils eine Biegelasche mit einer Prägung ausgebildet, welche eine Vorspannkraft auf das Gehäuse ausübt. Die Prägung kann vorzugsweise als Einprägung in eine nach außen gerichtete Oberfläche der Biegelasche eingebracht werden, so dass an einer dem Gehäuse zugewandten Oberfläche der Biegelasche eine korrespondierende Ausprägung ausgebildet werden kann. Über eine Tiefe der Einprägung können eine Höhe der korrespondierenden Ausprägung und somit die Vorspannkraft eingestellt werden. Durch die Biegelaschen können auch bei einem geschlossenen Abschirmblech, welches sich über den Umfang nicht mehr aufbiegen lässt, entsprechende Vorspannkräfte erzeugt werden. Da die Biegelaschen am oberen Rand des Abschirmblechs angeordnet sind, treffen die Prägungen bei der Montage des Abschirmblechs erst kurz vor dessen Endposition auf das Gehäuse, wodurch sich die Biegelaschen nach außen aufbiegen können und somit das Abschirmblech verspannen. Dadurch ergeben sich geringere Fügekräfte im Vergleich zu einem "geschlitzten" verspannten Blech, welches über die gesamte Höhe des Abschirmblechs Vorspannkräfte erzeugt. Über Form und Abmessungen der Prägungen können die Vorspannkräfte der Biegelaschen und erlaubte Beschleunigungen für die Handhabung des Bauteils in der Fertigung vorgegeben werden.

Zudem wird ein ESP-System mit einem bürstenlosen Gleichstrommotor zum Antreiben von mindestens einem Druckerzeuger und einem solchen Rotorpositionssensor vorgeschlagen, welcher eine momentane Drehposition des Gleichstrommotors ermittelt.

Unter einem Rotorpositionssensor wird nachfolgend eine Baugruppe mit einem Sensorelement verstanden, welches vorzugsweise auf dem TMR-Effekt (magnetoresistiver Tunneleffekt) basiert. Selbstverständlich können auch Sensorelemente eingesetzt werden, welche auf einem anderen magnetoresistiven Effekt, wie beispielsweise dem AMR-Effekt (Anisotroper magnetoresistiver Effekt), GMR-Effekt (Riesenmagnetowiderstandseffekt), CMR-Effekt (kolossaler magnetoresistiver Effekt) usw. basieren. Hierbei kann das vom Sensorelement detektierte Drehpositionssignal über eine Leiterplatte und Stromschienen, welche in die Leiterplatte eingepresst sind, zu einem Steuergerät übertragen werden. Die Stromschienen werden durch das Gehäuse in Position gehalten, welches vorzugsweise als Kunststoffgehäuse ausgeführt ist. Hierbei kann das Gehäuse auf der Leiterplatte aufgesetzt werden, welche an einem Sensorsockel befestigt ist. Der Sensorsockel kann am Pumpengehäuse befestigt werden und einen Hohlraum ausbilden, in welchen ein Ende einer Motorwelle des bürstenlosen Gleichstrommotors hineinragt. Hierbei kann an diesem Ende der Motorwelle ein Permanentmagnet als Signalgeber für das Sensorelement angeordnet werden. Das Sensorelement kann vorzugsweise auf einer der Motorwelle bzw. dem Permanentmagneten zugewandten Seite der Leiterplatte in einer Aussparung des Sensorsockels angeordnet werden. Alternativ kann das Sensorelement auf einer dem Gehäuse zugewandten Seite der Leiterplatte innerhalb des Gehäuses angeordnet werden. Eine Blechplatine des Abschirmblechs wird entsprechend der Geometrie des Gehäuses gebogen, wobei zur Verbesserung der elektromagnetischen Abschirmwirkung das Abschirmblech rundum geschlossen ist. Hierbei ist beispielsweise an beiden Blechenden eine "Puzzleteilekontur" gestanzt, welche nach dem Biegevorgang fest ineinandergreift, um eine möglichst geschlossene elektrische Kontaktierung zu erzeugen. Das fertige gebogene Abschirmblech wird dann so über das Gehäuse geschoben, dass es sich in einem definierten Abstand zum Sensorelement befindet.

Durch die in den abhängigen Ansprüchen aufgeführten Maßnahmen und Weiterbildungen sind vorteilhafte Verbesserungen des im unabhängigen Patentanspruch 1 angegebenen Rotorpositionssensors für einen Gleichstrommotor möglich.

In weiterer vorteilhafter Ausgestaltung des Rotorpositionssensors kann die Ausprägung eine scharfe Kante aufweisen, welche einem Abziehen des Abschirmblechs vom Gehäuse entgegenwirken kann. Hierbei kann die scharfe Kante der Ausprägung eine hohe punktuelle Spannkraft auf das Kunststoffgehäuse erzeugen, so dass sich im Bereich der Ausprägung über die Zeit eine formschlüssige Verbindung zwischen dem Kunststoffgehäuse und der Ausprägung ausbilden kann. Das bedeutet, dass sich der Kunststoff im Bereich der Ausprägung während des Betriebs, beispielsweise aufgrund von hohen Temperaturen, entspannt und durch die hohe punktuelle Spannung der scharfen Kante beginnt, diese formschlüssig zu umschließen. Dadurch ergeben sich im Betrieb höhere Haltekräfte als direkt nach dem Einbau.

In weiterer vorteilhafter Ausgestaltung des Rotorpositionssensors kann das Abschirmblech an einem zweiten unteren Rand mit dem Gehäuse verbunden werden. Das Abschirmblech kann beispielsweise am zweiten unteren Rand mit dem Gehäuse verklebt werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Darstellung eines Ausführungsbeispiels eines erfindungsgemäßen ESP-Systems mit einem erfindungsgemäßen Rotorpositionssensor für einen Gleichstrommotor.
Fig. 2 zeigt eine schematische perspektivische Darstellung eines Ausführungsbeispiels des erfindungsgemäßen Rotorpositionssensors für einen Gleichstrommotor aus Fig. 1.
Fig. 3 zeigt eine schematische perspektivische Darstellung eines Ausführungsbeispiels eines Abschirmbleches des Rotorpositionssensors für einen Gleichstrommotor aus Fig. 1 und 2.
Fig. 4 zeigt eine Schnittdarstellung des erfindungsgemäßen Rotorpositionssensors aus Fig. 1 und 2 nach der Montage des Abschirmblechs.
Fig. 5 zeigt eine Schnittdarstellung eines oberen Abschnitts des erfindungsgemäßen Rotorpositionssensors aus Fig. 4 nach einer längeren Betriebszeit.

### Ausführungsformen der Erfindung

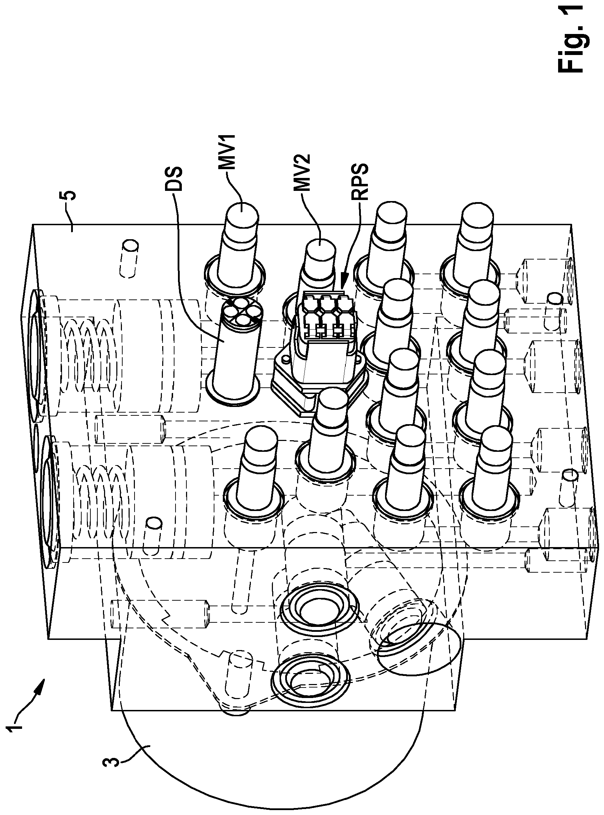

Wie aus Fig. 1 ersichtlich ist, umfasst das dargestellte Ausführungsbeispiel eines erfindungsgemäßen ESP-Systems 1 einen bürstenlosen Gleichstrommotor 3 zum Antreiben von mindestens einem Druckerzeuger und einen erfindungsgemäßen Rotorpositionssensor RPS, welcher eine momentane Drehposition des Gleichstrommotors 3 ermittelt.

Wie aus Fig. 1 weiter ersichtlich ist, umfasst das ESP-System 1 im dargestellten Ausführungsbeispiel ein transparent dargestelltes Pumpengehäuse 5 mit mehreren nicht näher bezeichneten Fluidpumpen, Federdruckspeichern und Fluidkanälen, mehrere stromlos offene Magnetventile MV1, mehrere stromlos geschlossene Magnetventile MV2 und einen Drucksensor DS.

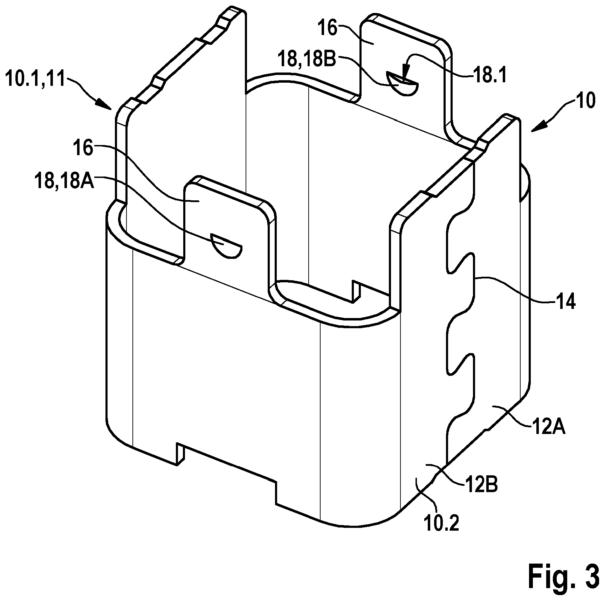

Wie aus Fig. 1 bis 5 weiter ersichtlich ist, umfasst das dargestellte Ausführungsbeispiel des erfindungsgemäßen Rotorpositionssensors RPS für einen Gleichstrommotor ein Gehäuse 7, 7A, ein Sensorelement 2 und ein das Gehäuse 7, 7A umschließendes Abschirmblech 10. Hierbei ist das Abschirmblech 10 geschlossen ausgebildet und über das Gehäuse 7, 7A geschoben. Die beiden Enden 12A, 12B des Abschirmblechs 10 bilden eine ineinandergreifende Verbindungskontur 14 aus.

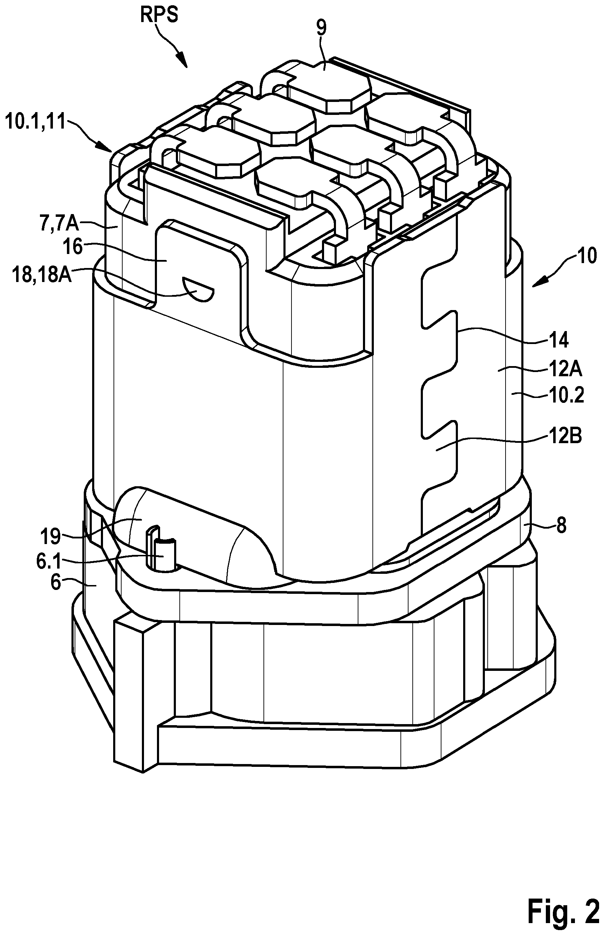

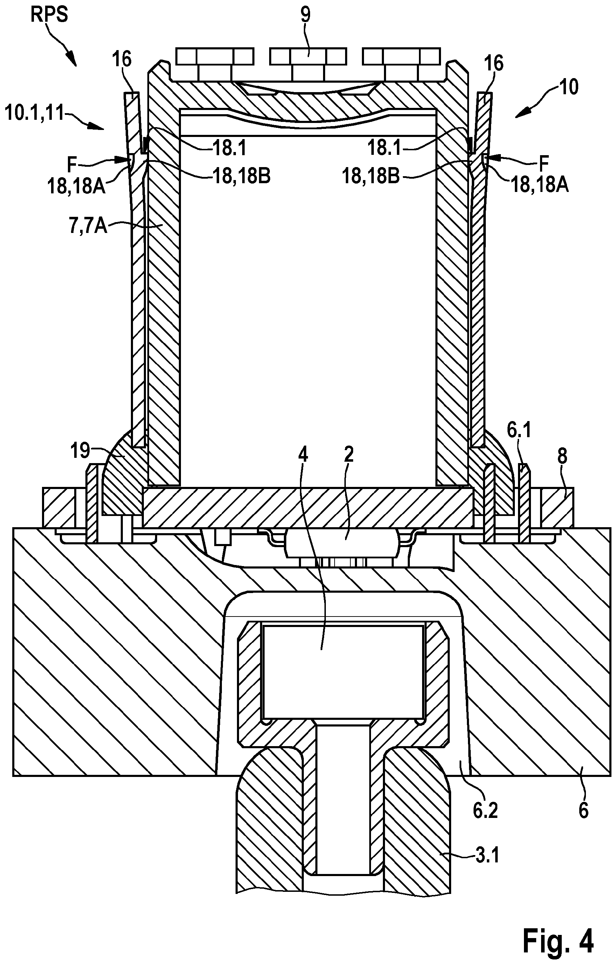

Das Gehäuse 7 ist im dargestellten Ausführungsbeispiel als Kunststoffgehäuse 7A ausgebildet. Das Sensorelement 2 basiert im dargestellten Ausführungsbeispiel auf dem TMR-Effekt (magnetoresistiver Tunneleffekt) und wirkt mit einem am Ende einer Motorwelle 3.1 bzw. eines Rotors des bürstenlosen Gleichstrommotors 3 angeordneten Permanentmagneten 4 zusammen, um die momentane Drehposition der Motorwelle 3.1 bzw. des Rotors des bürstenlosen Gleichstrommotors 3 zu erfassen. Selbstverständlich können auch andere Sensorelemente 2 eingesetzt werden, welche geeignet sind die momentane Drehposition der Motorwelle bzw. des Rotors des bürstenlosen Gleichstrommotors 3 zu erfassen. Im dargestellten Ausführungsbeispiel wird das vom Sensorelement 2 detektierte Drehpositionssignal über eine Leiterplatte 8 und Stromschienen 9, welche in die Leiterplatte 8 eingepresst sind und durch das Gehäuse 7, 7A in Position gehalten werden, zu einem nicht dargestellten Steuergerät übertragen. Wie aus Fig. 2 und 4 weiter ersichtlich ist, umfasst der Rotorpositionssensor RPS einen Sensorsockel 6 mit mehreren Befestigungsstiften 6.1. Die Leiterplatte 8 ist so auf den Sensorsockel 6 aufgesetzt, dass die Befestigungsstifte 6.1 des Sensorsockels 6 korrespondierende Öffnungen der Leiterplatte 8 durchgreifen. Zudem ist der Sensorsockel 6 im dargestellten Ausführungsbeispiel am Pumpengehäuse 5 befestigt und bildet einen Hohlraum 6.2 aus, in welchen das Ende der Motorwelle 3.1 des bürstenlosen Gleichstrommotors 3 mit dem Permanentmagneten 4 hineinragt. Im dargestellten Ausführungsbeispiel ist das Sensorelement 2 auf einer der Motorwelle 3.1 bzw. dem Permanentmagneten 4 zugewandten Seite der Leiterplatte 8 in einer Aussparung des Sensorsockels 6 angeordnet, welcher von der Leiterplatte 8 abgedeckt ist. Bei einem alternativen nicht dargestellten Ausführungsbeispiel ist das Sensorelement 2 auf einer dem Gehäuse 7 zugewandten Seite der Leiterplatte 8 innerhalb des Gehäuses 7 angeordnet. Das Steuergerät kann beispielsweise über Federkontakte mit den Stromschienden des Rotorpositionssensors RPS kontaktiert werden.

Wie aus Fig. 1 bis 3 weiter ersichtlich ist, ist eine Blechplatine des Abschirmblechs 10 entsprechend der Geometrie des Gehäuses 7, 7A gebogen, wobei zur Verbesserung der elektromagnetischen Abschirmwirkung das Abschirmblech 10 rundum geschlossen ist. Im dargestellten Ausführungsbeispiel ist an beiden Blechenden 12A, 12B eine "Puzzleteilekontur" gestanzt, welche nach dem Biegevorgang fest ineinandergreift, um eine möglichst geschlossene elektrische Kontaktierung zu erzeugen.

Wie aus Fig. 2 bis 5 weiter ersichtlich ist, ist ein oberer Rand 10.1 des Abschirmblechs als Krone 11 ausgeführt, wobei an zwei gegenüberliegenden Seiten jeweils eine Biegelasche 16 mit einer Prägung 18 ausgebildet ist, welche eine Vorspannkraft F auf das Gehäuse 7, 7A ausüben. Hierbei sind die Prägungen 18 jeweils als Einprägung 18A in eine nach außen gerichtete Oberfläche der Biegelasche 16 eingebracht, so dass an einer dem Gehäuse 7, 7A zugewandten Oberfläche der Biegelasche 16 eine korrespondierende Ausprägung 18B ausgebildet ist. Zudem weist die Ausprägung 18B im dargestellten Ausführungsbeispiel eine scharfe Kante 18.1 auf, welche einem Abziehen des Abschirmblechs 10 vom Gehäuse 7, 7A entgegenwirkt. Diese Ausführung der Prägungen 18 erlaubt bei kleineren Vorspannungen höhere Beschleunigungen in der Fertigung, was sich letztendlich positiv auf die Taktzeit auswirkt. Die Einprägungen 18A bzw. Ausprägungen sind als sogenannte. "Nibbel" ausgeführt, welche durch eine Art Stanzprägen erzeugt werden können. Hierbei wird das Material der Biegelasche 16 an einer Stelle gestanzt und im restlichen Bereich geprägt. Dadurch entsteht im gestanzten Bereich die scharfe Kante 18.1, welche dem Abziehen des Abschirmbleches 10 entgegenwirkt. Über eine Tiefe der Einprägung 18A lässt sich eine Höhe der korrespondierenden Ausprägung 18B und damit die Vorspannkraft F einstellen. Das fertige gebogene Abschirmblech 10 wird dann so über das Gehäuse 7, 7A geschoben, dass es sich in einem definierten Abstand zum Sensorelement 2 befindet.

Da die Biegelaschen 16 am oberen Rand des Abschirmblechs 10 angeordnet sind, treffen die Prägungen 18 bei der Montage des Abschirmblechs 10 erst kurz vor dessen Endposition auf das Gehäuse 7, wodurch sich die Biegelaschen 16 nach außen aufbiegen können und somit das Abschirmblech 10 verspannen. Wie aus Fig. 2 und 4 weiter ersichtlich ist, ist das Abschirmblech 10 an seinem zweiten unteren Rand 10.2 mit dem Gehäuse 7, 7A verbunden. Im dargestellten Ausführungsbeispiel ist das Abschirmblech 10 am zweiten unteren Rand 10.2 über eine Kleberaupe 19 mit dem Gehäuse 7, 7A und der Leiterplatte 8 verklebt. Zudem ist die Leiterplatte 8 im dargestellten Ausführungsbeispiel über die Kleberaupe 19 mit den Befestigungsstiften 6.1 des Sensorsockels 6 verklebt.

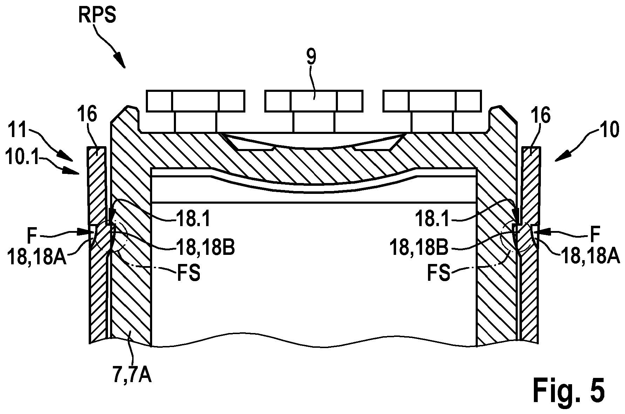

Wie aus Fig. 4 und 5 weiter ersichtlich ist, erzeugt die scharfe Kante 18.1 der Ausprägung 18B eine hohe punktuelle Spannkraft auf das Kunststoffgehäuse 7A, so dass sich im Bereich der Ausprägung 18B über die Zeit eine formschlüssige Verbindung FS zwischen dem Kunststoffgehäuse 7A und der Ausprägung 18B ausbildet. Dadurch ergeben sich im Betrieb höhere Haltekräfte als nach der Montage des Abschirmblechs 10.

Ausführungsformen der vorliegenden Erfindung stellen einen Rotorpositionssensor für einen Gleichstrommotor sowie ESP-System mit einem solchen Rotorpositionssensor zur Verfügung, welcher durch das geschlossene Abschirmblech in vorteilhafter Weise eine höhere Schirmwirkung erzeugt.

## Patentansprüche

1. Rotorpositionssensor (RPS) für einen Gleichstrommotor (3), wobei der Rotorpositionssensor (RPS) ein Gehäuse (7, 7A), ein Sensorelement (2) und ein das Gehäuse (7, 7A) umschließendes Abschirmblech (10) umfasst, wobei das Abschirmblech (10) als umfänglich geschlossener Hohlkörper ausgebildet und über das Gehäuse (7, 7A) geschoben ist, wobei die beiden Enden (12A, 12B) des Abschirmblechs (10) an einer Verbindungsstelle des Hohlkörpers eine ineinandergreifende Verbindungskontur (14) ausbilden, wobei der Rotorpositionssensor (RPS) an dem Gleichstrommotor (3) anordenbar ist, wobei ein zweiter unterer Rand (10.2) des Abschirmblechs (10) dem Gleichstrommotor (3) zugewandt ist, wobei an einem ersten vom Gleichstrommotor (3) abgewandten oberen Rand (10.1) des Abschirmblechs (10) an mindestens zwei gegenüberliegenden Seiten jeweils eine Biegelasche (16) mit einer Prägung (18) ausgebildet ist, welche eine Vorspannkraft (F) auf das Gehäuse (7, 7A) ausüben.

2. Rotorpositionssensor (RPS) nach Anspruch 1, **dadurch gekennzeichnet, dass** das Gehäuse (7) als Kunststoffgehäuse (7A) ausbildet ist.

3. Rotorpositionssensor (RPS) nach Anspruch 1 oder 2, **dadurch gekennzeichnet, dass** die Prägung (18) als Einprägung (18A) in eine nach außen gerichtete Oberfläche der Biegelasche (16) eingebracht ist, so dass an einer dem Gehäuse (7, 7A) zugewandten Oberfläche der Biegelasche (16) eine korrespondierende Ausprägung (18B) ausgebildet ist.

4. Rotorpositionssensor (RPS) nach Anspruch 3, **dadurch gekennzeichnet, dass** über eine Tiefe der Einprägung (18A) eine Höhe der korrespondierenden Ausprägung (18B) und damit die Vorspannkraft (F) einstellbar ist.

5. Rotorpositionssensor (RPS) nach Anspruch 3 oder 4, **dadurch gekennzeichnet, dass** die Ausprägung (18B) eine scharfe Kante (18.1) aufweist, welche einem Abziehen des Abschirmblechs (10) vom Gehäuse (7, 7A) entgegenwirkt.

6. Rotorpositionssensor (RPS) nach Anspruch 5, **dadurch gekennzeichnet, dass** die scharfe Kante (18.1) der Ausprägung (18B) eine hohe punktuelle Spannkraft auf das Kunststoffgehäuse (7A) erzeugt, so dass sich im Bereich der Ausprägung (18B) über die Zeit eine formschlüssige Verbindung (FS) zwischen dem Kunststoffgehäuse (7A) und der Ausprägung (18B) ausbildet.

7. Rotorpositionssensor (RPS) nach einem der Ansprüche 1 bis 6, **dadurch gekennzeichnet, dass** das Abschirmblech (10) an einem zweiten unteren Rand (10.2) mit dem Gehäuse (7, 7A) verbunden ist.

8. Rotorpositionssensor (RPS) nach Anspruch 7, **dadurch gekennzeichnet, dass** das Abschirmblech (10) am zweiten unteren Rand (10.2) mit dem Gehäuse (7, 7A) verklebt ist.

9. ESP-System (1) mit einem bürstenlosen Gleichstrommotor (3) zum Antreiben von mindestens einem Druckerzeuger und einem Rotorpositionssensors (RPS), welcher eine momentane Drehposition des Gleichstrommotors (3) ermittelt, wobei der Rotorpositionssensor (RPS) nach einem der Ansprüche 1 bis 8 ausgebildet ist.

## Claims

1. Rotor position sensor (RPS) for a DC motor (3), wherein the rotor position sensor (RPS) comprises a housing (7, 7A), a sensor element (2), and a sheet-metal shield (10) which encloses the housing (7, 7A); wherein the sheet-metal shield (10) is configured as a circumferentially closed hollow member and is pushed over the housing (7, 7A); wherein the two ends (12A, 12B) of the sheet-metal shield (10) at a connection point of the hollow member configure a mutually engaging connection contour (14); wherein the rotor position sensor (RPS) is able to be disposed on the DC motor (3); wherein a second lower periphery (10.2) of the sheet-metal shield (10) faces the DC motor (3); wherein a bending tab (16) with an embossing (18) is in each case configured on at least two mutually opposite sides on a first upper periphery (10.1) of the sheet-metal shield (10) that faces away from the DC motor (3), said bending tabs (16) exerting a pretensioning force (F) on the housing (7, 7A).

2. Rotor position sensor (RPS) according to Claim 1, **characterized in that** the housing (7) is configured as a plastics-material housing (7A).

3. Rotor position sensor (RPS) according to Claim 1 or 2, **characterized in that** the embossing (18) is incorporated as an embossed depression (18A) in an outwardly oriented surface of the bending tab (16) such that a corresponding embossed elevation (18B) is configured on a surface of the bending tab (16) that faces the housing (7, 7A).

4. Rotor position sensor (RPS) according to Claim 3, **characterized in that** a height of the corresponding embossed elevation (18B), and thus the pre-loading force (F), is adjustable by way of a depth of the embossed depression (18A).

5. Rotor position sensor (RPS) according to Claim 3 or 4, **characterized in that** the embossed elevation (18B) has a sharp edge (18.1) which counteracts the sheet-metal shield (10) being pulled off the housing (7, 7A).

6. Rotor position sensor (RPS) according to Claim 5, **characterized in that** the sharp edge (18.1) of the embossed elevation (18B) generates a high punctiform clamping force acting on the plastics-material housing (7A) such that in the region of the embossed elevation (18B) a form-fitting connection (FS) between the plastics-material housing (7A) and the embossed elevation (18B) is formed over time.

7. Rotor position sensor (RPS) according to one of Claims 1 to 6, **characterized in that** the sheet-metal shield (10) on a second lower periphery (10.2) is connected to the housing (7, 7A).

8. Rotor position sensor (RPS) according to Claim 7, **characterized in that** the sheet-metal shield (10) on the second lower periphery (10.2) is adhesively bonded to the housing (7, 7A).

9. ESP system (1) having a brushless DC motor (3), for driving at least one pressure generator, and a rotor position sensor (RPS) which determines a momentary rotary position of the DC motor (3), wherein the rotor position sensor (RPS) is configured according to one of Claims 1 to 8.

## Revendications

1. Capteur de position de rotor (RPS) pour un moteur à courant continu (3), dans lequel le capteur de position de rotor (RPS) comprend un boîtier (7, 7A), un élément capteur (2) et une tôle de blindage (10) entourant le boîtier (7, 7A), dans lequel la tôle de blindage (10) est réalisée sous la forme d'un corps creux fermé en circonférence et est glissée sur le boîtier (7, 7A), dans lequel les deux extrémités (12A, 12B) de la tôle de blindage (10) réalisent au niveau d'un point de jonction du corps creux un contour de jonction (14) qui s'imbrique, dans lequel le capteur de position de rotor (RPS) peut être disposé sur le moteur à courant continu (3), dans lequel un deuxième bord inférieur (10.2) de la tôle de blindage (10) est tourné vers le moteur à courant continu (3), dans lequel, au niveau d'un premier bord supérieur (10.1), détourné du moteur à courant continu (3), de la tôle de blindage (10), sur au moins deux côtés opposés, respectivement une languette flexible (16) munie d'un estampage (18) est réalisée qui exerce une force de précontrainte (F) sur le boîtier (7, 7A).

2. Capteur de position de rotor (RPS) selon la revendication 1, **caractérisé en ce que** le boîtier (7) est réalisé comme un boîtier en matière plastique (7A).

3. Capteur de position de rotor (RPS) selon la revendication 1 ou 2, **caractérisé en ce que** l'estampage (18) est inséré sous la forme d'une empreinte (18A) dans une surface, tournée vers l'extérieur, de la languette flexible (16) de sorte que sur une surface, tournée vers le boîtier (7, 7A), de la languette flexible (16), une moulure (18B) correspondante est réalisée.

4. Capteur de position de rotor (RPS) selon la revendication 3, **caractérisé en ce qu'**une profondeur de l'empreinte (18A) permet de régler une hauteur de la moulure (18B) correspondante et donc la force de précontrainte (F).

5. Capteur de position de rotor (RPS) selon la revendication 3 ou 4, **caractérisé en ce que** la moulure (18B) présente une arête vive (18.1) qui s'oppose au retrait de la tôle de blindage (10) du boîtier (7, 7A).

6. Capteur de position de rotor (RPS) selon la revendication 5, **caractérisé en ce que** l'arête vive (18.1) de la moulure (18B) génère une force de serrage ponctuelle élevée sur le boîtier en matière plastique (7A) de sorte qu'avec le temps, dans la zone de la moulure (18B), une liaison par complémentarité de forme (FS) est réalisée entre le boîtier en matière plastique (7A) et la moulure (18B).

7. Capteur de position de rotor (RPS) selon l'une quelconque des revendications 1 à 6, **caractérisé en ce que** la tôle de blindage (10) est reliée au boîtier (7, 7A) au niveau d'un deuxième bord inférieur (10.2).

8. Capteur de position de rotor (RPS) selon la revendication 7, **caractérisé en ce que** la tôle de blindage (10) est collée au boîtier (7, 7A) au niveau du deuxième bord inférieur (10.2).

9. Système ESP (1) comprenant un moteur à courant continu sans balais (3) pour entraîner au moins un générateur de pression et un capteur de position de rotor (RPS) qui détermine une position de rotation momentanée du moteur à courant continu (3), le capteur de position de rotor (RPS) étant réalisé selon l'une quelconque des revendications 1 à 8.
